# FASCICULE DE BREVET EUROPEEN

(11) **EP 2 955 878 B1**
(45) Date de publication et mention de la délivrance du brevet: **29.07.2020**
(21) Numéro de dépôt: 15171330.2
(22) Date de dépôt: 10.06.2015
(51) Int. Cl.: H04L 12/46, H04L 12/801

(54) **PROCÉDÉ DE GESTION D'UN CANAL DE COMMUNICATION VIRTUEL PRIVÉ ENTRE UN TERMINAL ET UN SERVEUR**
STEUERVERFAHREN EINES PRIVATEN VIRTUELLEN KOMMUNIKATIONSKANALS ZWISCHEN EINEM ENDGERÄT UND EINEM SERVER
METHOD FOR MANAGING A VIRTUAL PRIVATE COMMUNICATION CHANNEL BETWEEN A TERMINAL AND A SERVER

(30) Priorité: 11.06.2014 FR 1455313
(43) Date de publication de la demande: 16.12.2015
(73) Titulaire: ENGIE, 92400 Courbevoie (FR)
(72) Inventeur: PIRES, David, 92000 NANTERRE (FR); DROUET, Etienne, 75017 PARIS (FR); PHILIPPE, Jean-François, 92500 RUEIL MALMAISON (FR)
(74) Mandataire: Cabinet Beau de Loménie

(56) Documents cités:
- WO-A1-2013/096938
- CA-A1- 2 393 685
- US-A1- 2013 318 345
- US-B1- 7 835 275
- ANDRE ZUQUETE ET AL: "Fast VPN mobility across Wi-Fi hotspots", SECURITY AND COMMUNICATION NETWORKS (IWSCN), 2010 2ND INTERNATIONAL WORKSHOP ON, IEEE, PISCATAWAY, NJ, USA, 26 mai 2010 (2010-05-26), pages 1-7, XP031699288, ISBN: 978-1-4244-6938-3

## Description

### Arrière-plan de l'invention

L'invention se rapporte au domaine général des télécommunications. Elle concerne plus précisément l'établissement et le maintien d'un réseau virtuel privé (en anglais « Virtual Private Network » ou VPN) entre un terminal et un serveur informatique.

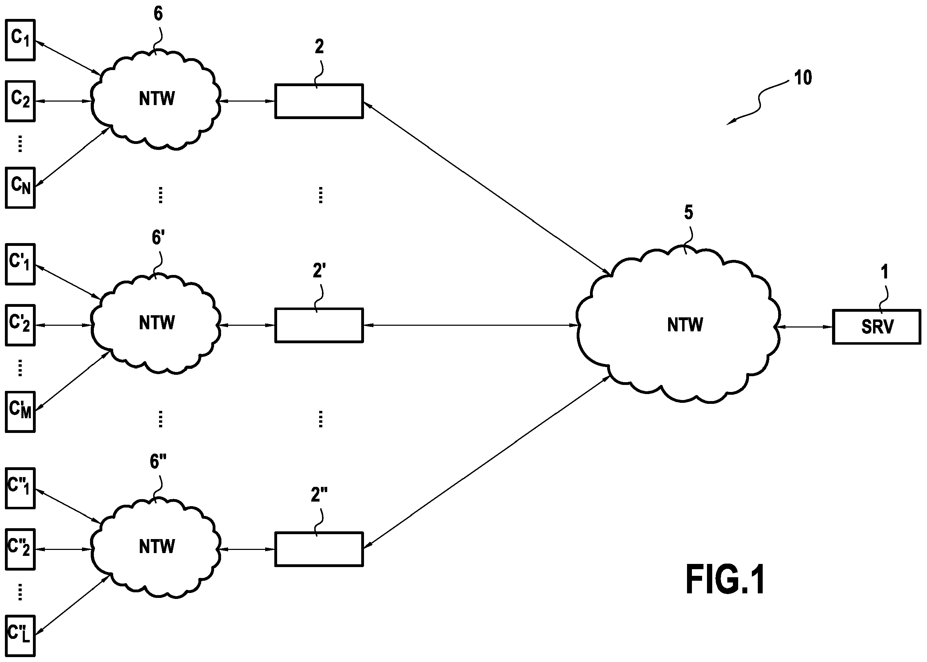

Le contexte de l'invention est présenté en référence à la **Figure 1** qui illustre un des problèmes de l'état actuel de la technique lié aux systèmes de collecte et de traitement de données environnementales.

Sur cette figure, un système de collecte et de traitement de données environnementales 10 est constitué d'un serveur 1, d'une pluralité de terminaux 2, ..., 2', ..., 2" et d'une pluralité de capteurs C₁, ..., C_{N}, C₁', ..., C_{M}', C₁",..., C_{L}".

Dans un tel système et de façon connue, chacun des capteurs C₁, ..., C_{N}, C₁', ..., C_{M}', C₁",..., C_{L}" communique avec un seul terminal 2, ..., 2', ..., 2" au travers d'un réseau 6, ..., 6', ..., 6".

Ainsi dans le système décrit à la figure 1, les capteurs C₁, ..., C_{N} communiquent avec le terminal 2 et les capteurs C₁', ..., C_{M}' avec le terminal 2'.

Chacun des terminaux 2, ..., 2', ..., 2" reçoit les données mesurées par les capteurs qui lui sont assignés, puis les agrège avant de les transmettre à un serveur centralisé 1 au travers d'un réseau 5.

Le réseau de télécommunications 5 peut être constitué de sous-réseaux mobiles ou fixes, filaires ou sans fils, privés ou publics, etc.

En d'autres termes, les terminaux 2, ..., 2', ..., 2" sont ainsi susceptibles de communiquer avec le serveur 1 au travers d'un réseau de télécommunications 5 intermittent.

Ainsi dans l'état actuel de la technique, lorsque le réseau virtuel privé entre un terminal 2, ..., 2', ..., 2" et le serveur 1 est interrompu, la continuité du service proposé par le système de collecte et de traitement de données environnementales n'est plus assurée.

On connait également le document « Fast VPN mobility across WI-Fi hotspots » (Andre ZUQUETE et al.) et le document WO 2013/096938.

### Objet et résumé de l'invention

La présente invention permet notamment de pallier l'inconvénient précité en proposant un procédé de gestion d'un canal de communication virtuel privé entre un terminal ayant une adresse IP fixe et un serveur. Ce procédé de gestion est destiné à être mis en oeuvre par un dispositif de communication installé sur le terminal et il comprend :
- une étape de détection de la disponibilité d'un premier canal de communication virtuel privé établi entre le terminal et le serveur ;
- si le premier canal de communication virtuel privé est disponible et établi :
   ∘ une étape d'obtention d'un paramètre représentatif d'une qualité de transmission par le premier canal de communication virtuel privé ; et
   ∘ si ce paramètre est représentatif d'une qualité de transmission inférieure à un niveau de qualité prédéterminé :
      ▪ une étape de fermeture du premier canal de communication virtuel privé établi entre le terminal et le serveur ;
      ▪ une première étape de récupération de l'ensemble des informations de configuration nécessaires à l'établissement d'un deuxième canal de communication virtuel privé par le dispositif de communication entre le terminal et le serveur, la première étape de récupération s'effectuant selon un protocole de communication sécurisé ; et
      ▪ une étape d'établissement d'un deuxième canal de communication virtuel privé entre le terminal et le serveur à l'aide des informations de configuration.

Corrélativement, l'invention vise selon un autre aspect un dispositif de communication destiné à être installé sur un terminal ayant une adresse IP fixe, le dispositif de communication étant destiné à gérer un canal de communication virtuel privé entre le terminal et un serveur, le dispositif de communication comprend :
- un module de détection de la disponibilité d'un premier canal de communication virtuel privé établi entre le terminal et le serveur ;
- un module d'obtention d'un paramètre représentatif d'une qualité de transmission par le premier canal de communication virtuel privé, le module d'obtention étant activé si le premier canal de communication virtuel privé est disponible ;
- un module de fermeture du premier canal de communication virtuel privé établi entre le terminal et le serveur ;
- un module de récupération de l'ensemble des informations de configuration nécessaires à l'établissement d'un deuxième canal de communication virtuel privé entre le terminal et le serveur, la récupération s'effectuant selon un protocole de communication sécurisé ; et
- un module d'établissement d'un deuxième canal de communication virtuel privé entre le terminal et le serveur à l'aide des informations de configuration,
le module de fermeture, le module de récupération et le module d'établissement étant activés si le paramètre représentatif d'une qualité de transmission est inférieur à un niveau de qualité prédéterminé.

La solution proposée par l'invention permet avantageusement de maintenir un haut niveau de disponibilité d'un canal de communication virtuel privé établi entre le terminal et le serveur au travers d'un réseau de télécommunication intermittent.

Au sens de l'invention, un canal virtuel privé est un lien de communication direct et privé entre un terminal et un serveur, ce lien de communication est établi en utilisant un protocole d'encapsulation (en anglais « tunneling ») c'est-à-dire en encapsulant de façon sécurisée les données à transmettre au travers d'un réseau qui est non sécurisé et le plus souvent public.

Dans un mode particulier de réalisation, les données sont chiffrées conformément au protocole TSL/SSL.

Lorsque qu'un premier réseau virtuel privé est établi et disponible, le dispositif de communication s'assure que ce premier réseau virtuel privé est stable et que les flux de données entre le terminal et le serveur peuvent effectivement être transmis.

A cet effet, le dispositif de communication calcule un paramètre dont la valeur reflète la qualité des transmissions au travers du premier canal de communication virtuel privé.

Si cette qualité de transmission est insuffisante, le dispositif de communication interrompt le premier canal de communication virtuel privé.

Le terminal récupère alors auprès du serveur les informations de configuration nécessaire à l'établissement d'un deuxième canal de communication virtuel privé, puis établit celui-ci.

Il est à noter que les informations de configuration peuvent avoir une date d'expiration. De façon très avantageuse, la récupération automatique de ces informations par le dispositif de communication auprès du serveur selon un protocole sécurisé permet d'éviter une intervention manuelle pour les mettre à jour sur le terminal, intervention manuelle qui postérieurement au déploiement du terminal sur le terrain pourrait s'avérer difficile.

Dans un mode particulier de réalisation, le procédé de gestion comprend également si le paramètre est représentatif d'une qualité de transmission inférieure à un niveau de qualité prédéterminé, une étape de signalement au serveur de la mauvaise qualité du premier canal de communication virtuel privé.

Le cas échéant, le terminal peut également signaler au serveur son adresse IP publique.

De façon avantageuse, le serveur est ainsi informé de la mauvaise qualité du premier canal de communication virtuel privé. Sur réception de cette information, le serveur peut par exemple mémoriser dans une base de données l'identité du terminal concerné et le cas échéant informer un administrateur des problèmes de communication rencontrés avec le terminal. L'administrateur peut alors se connecter sur le terminal en utilisant par exemple son adresse IP publique afin de pouvoir diagnostiquer les raisons pour lesquelles la qualité du canal virtuel privé est insuffisante.

Corrélativement, dans un mode particulier de réalisation de l'invention, le dispositif de communication selon l'invention comprend également un module de signalement au serveur de la mauvaise qualité du premier canal de communication virtuel privé, le module de signalement étant activé si le paramètre de qualité est représentatif d'une qualité de transmission inférieure à un niveau de qualité prédéterminé.

Dans un mode de réalisation particulier de l'invention, l'analyse de la qualité de transmission par le premier canal de communication virtuel privé, i.e. l'étape de détection, est réalisée avantageusement de façon périodique.

En variante, l'analyse de la qualité de la transmission peut être réalisée au démarrage d'une session de communication de données entre le terminal et le serveur.

Dans un mode particulier de réalisation de l'invention, le procédé de gestion d'un canal de communication virtuel privé comprend en outre si le premier canal de communication virtuel privé n'est pas disponible :
- une étape de vérification de la disponibilité sur le terminal de l'ensemble des informations de configuration nécessaires à l'établissement d'un canal de communication virtuel privé ;
- si au moins une des informations de configuration n'est pas disponible sur ledit terminal, une deuxième étape de récupération de ladite au moins une information de configuration indisponible sur le terminal par le dispositif de communication auprès du serveur, la deuxième étape de récupération s'effectuant selon un protocole de communication sécurisé.
- une étape d'établissement d'un troisième canal de communication virtuel privé entre le terminal et le serveur.

L'invention vise aussi un procédé de gestion d'un canal de communication virtuel privé tel que mentionné ci-dessus dans lequel ledit ensemble d'information de configuration comporte au moins un fichier stocké sur ledit serveur, ledit fichier étant fragmentable en une pluralité de fragments, lesdites étapes de récupération comprenant pour chacun desdits fragments :
- une étape d'émission à destination du serveur d'une requête signée de transmission dudit fragment, ladite étape d'émission étant répétée jusqu'à réception d'un premier message de réponse en provenance du serveur à ladite requête signée de transmission ; et
- une première étape de déchiffrement du bloc de données transporté dans ledit message de réponse pour obtenir ledit fragment.

Dans un mode de réalisation particulier de l'invention, ce procédé de gestion comprend en outre une étape de détection que tous les fragments dudit fichier ont été réceptionnés.

Dans un mode de réalisation particulier de l'invention, ce procédé de gestion comprend en outre une étape d'agrégation desdits fragments pour obtenir ledit fichier.

Dans un mode de réalisation particulier de l'invention, ce procédé de gestion comprend en outre :
- une étape de calcul d'une première empreinte dudit fichier en utilisant une fonction de hachage connue du serveur ;
- une étape d'émission à destination dudit serveur d'une requête signée de validation de ladite première empreinte ;
- une étape de réception en provenance du serveur d'un deuxième message de réponse à ladite requête signée de validation ; et
- une deuxième étape de déchiffrement du bloc de données transporté dans ledit deuxième message de réponse pour obtenir une information de confirmation ; et
- si l'information de confirmation valide l'intégrité dudit fichier, une étape de sauvegarde dudit fichier.

Dans un mode de réalisation particulier de l'invention, la signature desdites requêtes émises par le dispositif de communication à destination du serveur est calculée sur un champ formé par la concaténation d'une clef secrète partagée avec le serveur, de l'adresse MAC du terminal et d'une information d'horodatage desdites requêtes, ladite information d'horodatage étant insérée dans lesdites requêtes.

Dans un mode de réalisation particulier de l'invention dans lequel ledit ensemble d'information de configuration comporte au moins un fichier stocké sur ledit serveur, ledit fichier étant fragmentable en une pluralité de fragments, ledit dispositif de communication mentionné ci-dessus comprend :
- un module d'émission à destination d'un serveur d'une requête signée de transmission d'un fragment dudit fichier, ledit premier module d'émission étant activé jusqu'à réception d'un premier message de réponse en provenance du serveur à ladite requête de transmission ;
- un module de déchiffrement du bloc de données transporté dans ledit message de réponse pour obtenir ledit fragment.

Dans un mode particulier de réalisation, les différentes étapes d'au moins un des procédés mentionnés ci-dessus sont déterminées par des instructions de programmes d'ordinateurs.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un Terminal sur lequel est installé un dispositif de communication selon l'invention.

### Brève description des dessins

Des caractéristiques et avantages particuliers de la présente invention ressortiront de la description détaillée faite ci-dessous, en référence aux figures annexées qui en illustrent des exemples de réalisation dépourvus de tout caractère limitatif. Sur les figures :
- la figure 1 déjà décrite illustre un exemple, conforme à l'état de la technique, de système de collecte et de traitement de données environnementales ;
- la figure 2 illustre un exemple d'architecture matérielle de télécommunications entre un terminal et un serveur selon un mode de réalisation de l'invention ;
- la figure 3 illustre un exemple d'architecture matérielle d'un dispositif de communication selon l'invention ;
- la figure 4 représente, sous forme d'ordinogramme, les principales étapes d'un procédé de gestion d'un canal de communication virtuel privé entre un terminal et un serveur, le procédé étant conforme à l'invention dans une variante d'implémentation ;
- la figure 5 illustre un terminal et un serveur selon un mode de réalisation de l'invention ;
- la figure 6a illustre un exemple d'architecture matérielle d'un dispositif de communication selon l'invention ;
- la figure 6b illustre un exemple d'architecture matérielle d'un dispositif de transmission selon l'invention ;
- la figure 7 représente, sous forme d'ordinogramme, les principales étapes d'un procédé de réception d'au moins une partie d'un fichier mis en œuvre par un dispositif de communication installé sur un terminal, le procédé étant conforme à l'invention dans une variante d'implémentation ; et
- Les figures 8 et 9 représentent, sous forme d'ordinogramme, les principales étapes d'un procédé de transmission d'au moins une partie d'un fichier mis en œuvre par un dispositif de transmission destiné à être installé sur un serveur, le procédé étant conforme à l'invention dans une variante d'implémentation.

### Description détaillée de l'invention

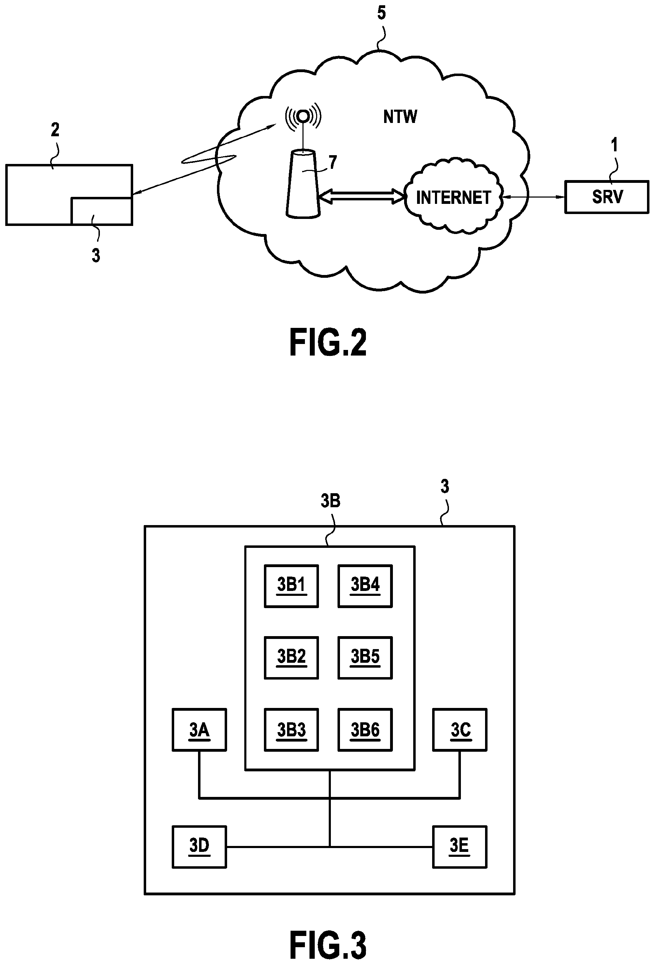

La **figure 2** représente, dans son environnement, un dispositif de communication 3 conforme à l'invention, dans un mode particulier de réalisation.

Par souci de simplification, des références identiques sont données sur cette figure aux éléments communs avec le système de collecte et de traitement de données environnementales illustré à la figure 1

Dans l'exemple envisagé à la figure 2, le dispositif de communication 3 est installé sur un terminal 2.

Aucune limitation n'est attachée à la nature du terminal 2. Le terminal 2 peut être par exemple un terminal informatique, un ordinateur portable ou encore une tablette.

Le terminal 2 communique avec un serveur 1 au travers d'un réseau de télécommunications 5.

Dans l'exemple décrit ici, le réseau de télécommunications 5 est constitué d'un réseau de télécommunications sans fil, par exemple de type GPRS (en anglais « General Packet Radio Service ») ou HSDPA (en anglais « High Speed Downlink Packet Access »), entre le terminal 2 et une station de base 7. La station de base 7 est elle-même reliée au serveur par l'intermédiaire d'un réseau public de type internet.

Conformément à l'invention, le dispositif de communication 3 gère l'établissement et le maintien d'un canal de communication virtuel privé entre le terminal 2 et le serveur 1 au travers du réseau de télécommunications 5.

Dans le mode de réalisation décrit ici, le terminal 2 et le serveur 1 ont chacun une adresse IP fixe sur le canal de communication virtuel privé. L'adresse IP fixe du serveur 1 et son adresse IP publique sont disponibles par défaut sur le terminal 2.

De façon connue, un tel canal virtuel privé peut par exemple être établi en utilisant le logiciel OpenVPN disponible à l'adresse http://openvpn.net/.

Plus précisément, le logiciel OpenVPN se compose de deux modules logiciels dont l'un, le client OpenVPN est à installer sur le terminal 2 et l'autre, le serveur OpenVPN, sur le serveur 1.

L'exécution du client OpenVPN sur le terminal 2 nécessite d'avoir installé sur ce terminal 2 les données de configuration suivantes :
- un certificat racine d'une autorité de certification ;
- un certificat et une clé privé associés au terminal 2 ; et
- un fichier de configuration du logiciel client OpenVPN, un tel fichier de configuration comprend par exemple l'adresse IP fixe du terminal 2 sur le réseau virtuel privé à établir.

En d'autres termes, dans le mode de réalisation décrit ici, le dispositif de communication 3 établit un canal de communication virtuel privé en lançant l'exécution sur le terminal 2 d'un client OpenVPN. De même, le dispositif de communication 3 ferme un canal de communication virtuel privé en arrêtant sur le terminal 2 le client OpenVPN correspondant.

Le dispositif de communication 3 dispose ici de l'architecture matérielle d'un ordinateur, telle qu'illustrée schématiquement à la **figure 3****.**

Il comporte notamment un processeur 3A, une mémoire morte 3B, une mémoire vive 3C, une mémoire non volatile 3D, et des moyens de communications 3E. Le processeur 3A, les mémoires 3B-3D et les moyens de communication 3E peuvent être partagés avec des moyens correspondants du terminal 2.

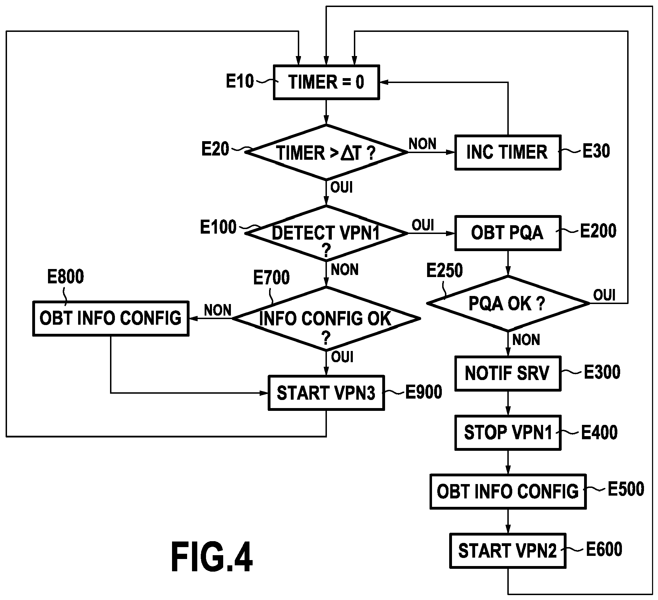

La mémoire morte 3B du dispositif de communication 3 constitue un support d'enregistrement lisible par le processeur 3A et sur lequel est enregistré un programme d'ordinateur conforme à l'invention, comportant des instructions pour l'exécution des étapes d'un procédé de gestion conforme à l'invention, les étapes de ce procédé de gestion étant décrites ultérieurement en référence à la figure 4, dans un mode particulier de réalisation.

Ce programme d'ordinateur définit de façon équivalente des modules (logiciels) fonctionnels du dispositif de communication 3, tels que notamment un module de détection 3B1 de la disponibilité d'un premier canal de communication virtuel privé établi entre le terminal 2 et le serveur 1, un module d'obtention 3B2 d'un paramètre PQA représentatif d'une qualité de transmission par le premier canal de communication virtuel privé, un module de fermeture 3B3 du premier canal de communication virtuel privé établi entre le terminal 2 et le serveur 1, un premier module de récupération 3B4 de l'ensemble des informations de configuration nécessaires à l'établissement d'un deuxième canal de communication virtuel privé entre le terminal 2 et le serveur 1, un premier module d'établissement 3B5 d'un deuxième canal de communication virtuel privé entre le terminal 2 et le serveur 1, et un module de signalement 3B6 audit serveur 1 de la mauvaise qualité dudit premier canal de communication virtuel privé, ledit module de signalement 3B6 étant activé si ledit paramètre PQA est représentatif d'une qualité de transmission inférieure à un niveau de qualité prédéterminé. Les fonctions de ces modules sont décrites plus en détail ci-dessous en référence aux étapes du procédé de gestion illustré à la figure 4.

La **figure 4** représente les principales étapes d'un procédé de gestion selon l'invention dans un mode particulier de réalisation.

On suppose par la suite que, préalablement à l'exécution du procédé de gestion, le serveur 1 a été équipé d'un serveur OpenVPN et que ce dernier est en cours d'exécution.

Dans le mode de réalisation décrit ici, le procédé de gestion est mis en oeuvre par le dispositif de communication 3.

Au cours d'une étape E100, le dispositif de communication 3 recherche si un premier canal virtuel privé établi entre le terminal 2 et le serveur 1 est disponible.

Dans le mode de réalisation décrit ici, un canal virtuel privé est disponible si et seulement si un unique client OpenVPN est en cours d'exécution sur le terminal 2 et le canal virtuel privé géré par ce client est accessible à une application tierce.

Si un premier canal de communication virtuel privé n'est pas disponible, le dispositif de communication 3 essaye d'en établir un conformément aux étapes E700, E800 et E900 décrites ultérieurement.

Dans le cas contraire, si un premier canal de communication virtuel privé est disponible (réponse oui à l'étape E100), le dispositif de communication 3 calcule, lors d'une étape E200, un paramètre PQA représentatif d'une qualité de transmission par le premier canal de communication virtuel privé.

Dans le mode de réalisation décrit ici, le dispositif de communication 3 envoie un nombre prédéterminé de paquets « ping » au serveur 1 et compte les paquets « pong » qu'il reçoit en retour.

Si le dispositif de communication 3 reçoit au moins un paquet « pong » en retour, le paramètre de qualité PQA est initialisé à la valeur binaire 1, sinon le paramètre de qualité PQA est initialisé à la valeur binaire 0.

En variante, le paramètre de qualité PQA est initialisé à la valeur binaire 1 si le dispositif de communication reçoit au moins un paquet « pong » pour deux paquets « pings » émis, sinon le paramètre de qualité PQA est initialisé à la valeur binaire 0.

Puis, le dispositif de communication 3 détermine au cours d'une étape E250 si le paramètre de qualité PQA ainsi obtenu est représentatif d'une qualité de transmission inférieure à un niveau de qualité prédéterminé.

A cet effet, il compare la valeur binaire du paramètre de qualité PQA avec la valeur 1.

Si le paramètre PQA est égal à 1, la qualité de transmission au travers du premier canal virtuel privé est considérée comme satisfaisante (réponse oui à l'étape E250). Le cas échéant, le dispositif de communication 3 se met en sommeil pendant une durée Δt afin de minimiser l'utilisation de la puissante de calcul (en anglais « CPU ») du terminal 2. Pour ce faire, il exécute l'étape E10 puis un certains nombres de fois les étapes E20 et E30.

Si au contraire, le paramètre PQA est égal à 0, la qualité de transmission au travers du premier réseau virtuel privé est considérée comme insuffisante (réponse non à l'étape E250).

Le cas échéant, le dispositif de communication 3 signale, au cours d'une étape E300, au serveur 1 que la qualité du premier canal de communication virtuel privé est insuffisante, par exemple en envoyant au serveur 1 un message de signalisation spécifique.

Dans le mode de réalisation décrit ici, le message de signalisation spécifique contient entre autre l'adresse MAC du terminal, son adresse IP sur le canal virtuel privé ainsi que son adresse IP publique.

Bien entendu d'autres types d'information peuvent être transmis au serveur 1, comme par exemple le nombre de paquets « pong » reçus et de paquets « ping » émis, ou encore un message d'information issu du client OpenVPN.

Après émission de ce message de signalisation, le dispositif de communication 3 ferme le premier canal de communication virtuel privé (étape E400) en arrêtant l'instance correspondante du client OpenVPN.

Le dispositif de communication 3 force ensuite, lors d'une étape E500, la mise à jour de l'ensemble des informations de configuration nécessaires à l'établissement d'un deuxième canal de communication virtuel privé entre le terminal 2 et le serveur 1. En d'autres termes, le dispositif de communication 3 télécharge auprès du serveur 1 un nouveau certificat racine de l'autorité de certification, un nouveau certificat associé au terminal associé, une nouvelle une clé privé ainsi qu'un nouveau fichier de configuration du logiciel client OpenVPN. Le téléchargement de l'ensemble de ces données de configuration s'effectue suivant un protocole sécurisé d'échange d'information entre le serveur 1 et le terminal 2.

Une fois les nouvelles informations de configuration installées sur le terminal 2, le dispositif de communication 3 utilise ces informations pour établir, au cours d'une étape E600, un deuxième canal de communication virtuel privé entre le terminal 2 et le serveur 1 en lançant l'exécution d'un nouveau client OpenVPN sur le terminal 2.

Puis, le dispositif de communication 3 se met en sommeil pendant une durée Δt en exécutant l'étape E10 puis un certains nombres de fois les étapes E20 et E30. Cette mise en sommeil du dispositif de communication 3 permet de garantir le délai nécessaire au client OpenVPN pour établir le deuxième canal de communication virtuel privé.

Nous allons maintenant décrire les différentes étapes effectuées par le dispositif de communication 3 lorsque celui détecte, à l'étape E100, qu'un premier canal de communication virtuel privé n'est pas disponible entre le terminal 2 et le serveur 1.

Le dispositif de communication 3 arrête tout d'abord à l'étape E650 tous les clients OpenVPN éventuellement en cours d'exécution sur le terminal 2.

Puis, à l'étape E700, le dispositif de communication 3 vérifie que toutes les informations nécessaires à l'établissement par le client OpenVPN d'un canal virtuel privé entre le terminal 2 et le serveur 1 sont disponibles sur le terminal 2.

Si ce n'est pas le cas, le dispositif de communication 3 force lors d'une étape E800, la mise à jour des informations de configuration indisponibles sur le terminal 2 et nécessaires à l'établissement d'un troisième canal de communication virtuel privé entre le terminal 2 et le serveur 1.

En variante, le dispositif de communication 3 force lors de l'étape E800, la mise à jour de l'ensemble des informations de configuration nécessaires à l'établissement d'un troisième canal de communication virtuel privé entre le terminal 2 et le serveur 1.

Dans les deux cas, le téléchargement de ces données de configuration s'effectue suivant un protocole sécurisé d'échange d'information entre le serveur 1 et le terminal 2.

Une fois que l'ensemble des informations de configuration sont disponibles sur le terminal 2, le dispositif de communication 3 les utilise pour établir, au cours d'une étape E900, un troisième canal de communication virtuel privé entre le terminal 2 et le serveur 1 en lançant l'exécution d'un client OpenVPN sur le terminal 2.

Puis, le dispositif de communication 3 se met en sommeil pendant une durée Δt en exécutant l'étape E10 puis un certains nombres de fois les étapes E20 et E30. Cette mise en sommeil du dispositif de communication 3 permet de garantir le délai nécessaire au client OpenVPN pour établir le troisième canal de communication virtuel privé.

Dans le mode de réalisation décrit ici, à l'issue de chaque période Δt de sommeil, le dispositif de communication 3 est réactivé et l'étape E100 de vérification de la disponibilité d'un premier canal virtuel privé établi entre le terminal 2 et le serveur 1 est de nouveau effectuée.

Nous allons maintenant décrire un mode dans lequel ledit ensemble d'information de configuration décrit ci-dessus comporte au moins un fichier (F) stocké sur ledit serveur (1), ledit fichier (F) étant fragmentable en une pluralité de fragments (FR1, FR2, FR3, FR4). Les étapes E500 et E800 de récupération d'information de configuration précédemment décrites mettent en œuvre un procédé de réception de fichier conforme à l'invention.

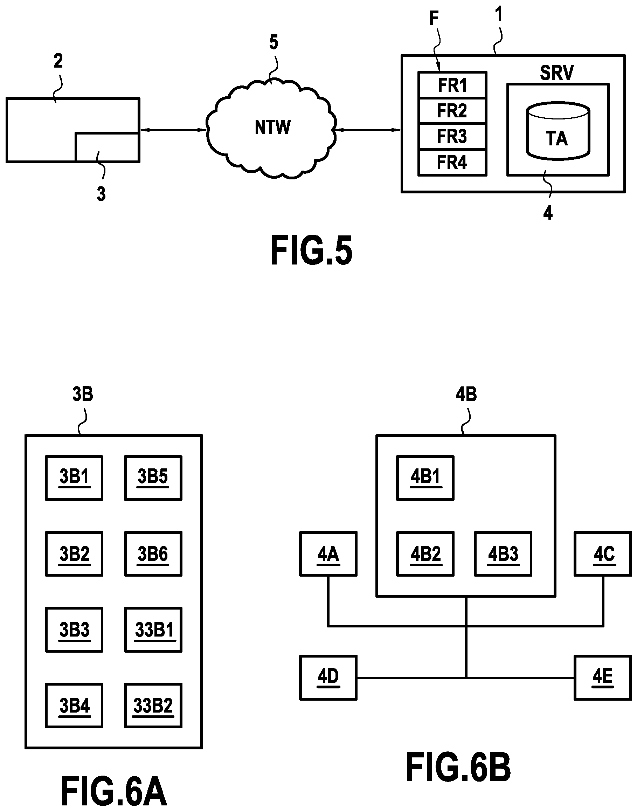

La **figure 5** représente un terminal 2 et un serveur 1 selon un mode de réalisation de l'invention.

Le terminal 2 communique avec le serveur 1 par l'intermédiaire d'un réseau de télécommunications 5.

Dans le mode de réalisation décrit ici, toutes les requêtes et tous les messages échangés entre le terminal 2 et le serveur 1 sont transportés dans des paquets UDP.

Le serveur 1 héberge un fichier F, constitué de 4 fragments (FRₖ)ₖ₌₁,..,₄, nécessaire au terminal 2, par exemple pour établir un canal de communication virtuel privé avec le serveur 1 au travers du réseau de télécommunications 5.

Le fichier F peut par exemple être
- un certificat racine d'une autorité de certification ; ou
- un certificat et une clé privé associés au terminal 2 ; ou encore
- un fichier de paramètres comprenant par exemple l'adresse IP fixe du terminal 2 sur le canal de communication virtuel privé.

Aucune limitation n'est d'autre part attachée à la nature du terminal 2, ni même à la nature du réseau de télécommunications 5 reliant ce terminal au serveur 1. Ainsi, le terminal 2 peut être indifféremment un ordinateur fixe ou portable, une tablette numérique ou encore un équipement dédié au sein d'un système de collecte et de traitement de données environnementales, etc.

De même le réseau de télécommunications 5 peut être un réseau mobile (ex. UMTS (Universal Mobile Telecommunications System)) ou fixe (ex. Ethernet), filaire ou sans fil (ex : WLAN (Wireless Local Area Network)), etc.

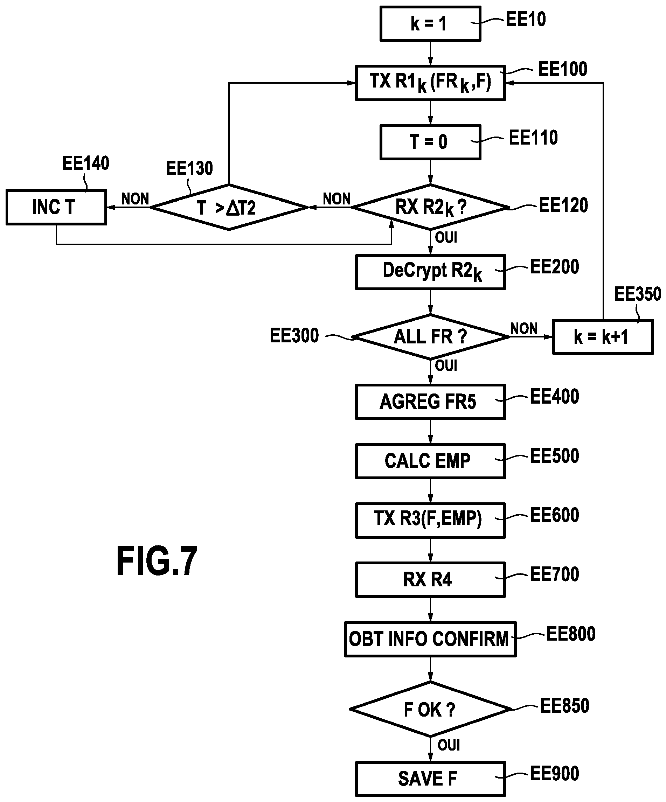

Dans ce mode de réalisation, le dispositif de communication 3 comporte en plus des composants décrit précédemment à la figure 3 et en référence à la figure 6a, un module d'émission 33B1 à destination du serveur 1 d'une requête signée de transmission R1ₖ d'un fragment FRₖ du fichier F, ce module d'émission 33B1 étant activé jusqu'à réception d'un premier message de réponse R2ₖ en provenance du serveur 1 à ladite requête de transmission R1ₖ et un module de déchiffrement 33B2 du bloc de données transporté dans le message de réponse R2ₖ pour obtenir le fragment FRₖ. Le module d'émission 33B1 utilise notamment les moyens de communication 3E. Les fonctions de ces deux modules sont décrites plus en détail en référence aux étapes du procédé de réception illustrées à la figure 7.

D'autre part, le serveur 1 contient un dispositif de transmission 4 conforme à l'invention et une table d'approbation TA référençant les terminaux avec lequel le dispositif de transmission 4 est autorisé à communiquer.

Le dispositif de transmission 4 dispose de l'architecture matérielle d'un ordinateur, telle qu'illustrée schématiquement à la **figure 6b****.**

Ainsi, le dispositif de transmission 4 comporte notamment un processeur 4A, une mémoire morte 4B, une mémoire vive 4C, une mémoire non volatile 4D et des moyens de communication 4E sur le réseau de télécommunications 5. Le processeur 4A, les mémoires 4B-4D et les moyens de communications 4E peuvent éventuellement être partagés avec des moyens correspondants du serveur 1.

La table d'approbation TA peut-être stockée dans la mémoire non volatile 4D du dispositif de transmission 4. En variante la table d'approbation TA peut être stockée dans une base de données interne au serveur 1.

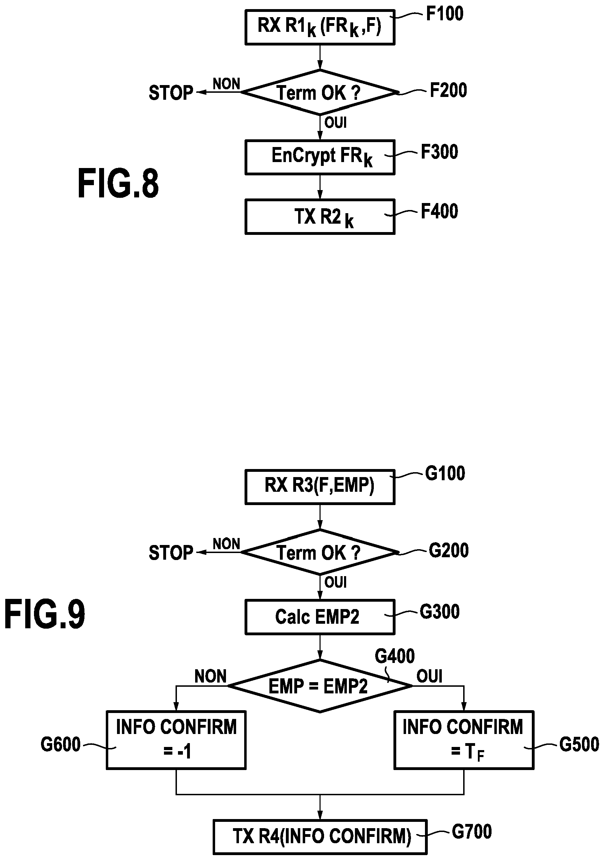

La mémoire morte 4B du dispositif de communication constitue un support d'enregistrement lisible par le processeur 4A et sur lequel est enregistré un programme d'ordinateur conforme à l'invention, comportant des instructions pour l'exécution des étapes d'un procédé de réception conforme à l'invention, les étapes de ce procédé de réception étant décrites ultérieurement en référence aux figures 8 et 9, dans un mode particulier de réalisation.

Ce programme d'ordinateur définit de façon équivalente des modules fonctionnels du dispositif de transmission 4, tels que notamment un module de réception 4B1 d'une requête signée de transmission R1ₖ d'un fragment FRₖ du fichier F, un module de cryptage 4B2 du fragment FRₖ et un module d'émission 4B3 d'un premier message de réponse R2ₖ transportant un bloc de données représentant le fragment crypté FRₖ, les modules de cryptage 4B2 et d'émission 4B3 étant activés si le terminal 2 est référencé dans la table d'approbation TA. Le module de réception 4B1 et le module d'émission 4B3 utilise notamment les moyens de communication 4E. Les fonctions de ces modules sont décrites plus en détail en référence aux étapes du procédé de transmission illustrées aux figures 8 et 9.

Nous allons maintenant décrire, en référence à la **figure 7****,** les principales étapes d'un procédé de réception d'au moins une partie du fichier F mis en oeuvre par le dispositif de réception 3 intégré dans le terminal 2.

Dans l'exemple décrit ici, les trois premiers fragments FR₁, FR₂ et FR₃ du fichier F ont la même taille L. Le quatrième fragment FR₄ est d'une taille inférieure à L.

Dans le mode de réalisation décrit ici, la taille L est choisie égale à la taille maximale du bloc de données qui peut être transporté dans le premier message de réponse R2ₖ.

Dans le mode de réalisation décrit ici, le dispositif de réception 3 réceptionne les quatre fragments FR₁, FR₂, FR₃, FR₄ du ficher F de façon successive dans l'ordre de leur énumération.

Ainsi, à l'étape EEE10, le dispositif de réception 3 initialise à 1 l'indice k du numéro de fragment FRₖ du fichier F à réceptionner.

Dans le mode de réalisation décrit ici, le dispositif de réception 3 émet, à l'étape EEE100, à destination du serveur 1, par exemple identifié par son adresse IP publique, une requête signée de transmission R1ₖ du fragment FRₖ du fichier F, cette requête signée R1ₖ comprend, outre sa signature, également l'adresse MAC du terminal 2 et une information d'horodatage.

Dans le mode de réalisation décrit ici, la signature de la requête de transmission R1ₖ est calculée en appliquant la fonction de hachage « sha » sur le champ formé par la concaténation d'une clef secrète partagée avec le serveur 1, de l'adresse MAC du terminal 2 et d'une information d'horodatage de la requête de transmission R1ₖ.

Bien entendu, en variante d'autres fonctions de hachage peuvent être utilisées pour signer la requête de transmission R1ₖ
Puis le dispositif de réception 3 attend pendant une durée ΔT2 (étapes EEE110, EEE120, EEE130 et EEE140) la réception d'un premier message de réponse R2ₖ (réponse non à l'étape EEE130) en provenance du serveur 1 à la requête signée de transmission R1ₖ.

Si le dispositif de réception 3 ne reçoit pas le premier message de réponse R2ₖ (réponse non à l'étape EEE120) dans l'intervalle de temps ΔT2, le dispositif de réception 3 émet une nouvelle requête signée de transmission R1ₖ du fragment FRₖ du fichier F (étape EE100).

Si le dispositif de réception 3 reçoit le premier message de réponse R2ₖ (réponse oui à l'étape EE120) dans l'intervalle de temps ΔT2, le dispositif de réception 3 calcule à partir des informations à sa disposition (clef secrète partagée avec le serveur 1, adresse MAC du terminal 2 et indice k référençant le fragment FRₖ du fichier F) et des informations extraites du premier message de réponse R2ₖ (information d'horodatage de R2ₖ) une clé de déchiffrement.

Le dispositif de réception déchiffre alors, à l'étape EE200, le bloc de données transporté dans le message de réponse R2ₖ pour obtenir le fragment FRₖ.

Après l'obtention du fragment FRₖ, le dispositif de réception 3 recherche, lors de l'étape EE300, si ce fragment FRₖ correspond au dernier fragment FR4 du fichier F.

Dans le mode de réalisation décrit ici, le dispositif de réception 3 compare à cet effet la taille du fragment FRₖ avec la taille maximale L du bloc de données qui peut être transporté dans le message de réponse R2ₖ.

Si la taille du fragment FRₖ est égale à L, le dispositif de réception 3 en déduit que le dernier fragment FR4 du fichier F n'a pas encore été reçu (réponse non à l'étape EE300). Le cas échéant, le dispositif de réception 3 incrémente l'indice k (étape EE350) et réitère les étapes EE100 à EE300 afin de réceptionner le fragment suivant du fichier F.

Si la taille du fragment FRₖ est inférieure à L, le dispositif de réception 3 en déduit que le dernier fragment FR4 du fichier F a été reçu (réponse oui à l'étape EE300). Le dispositif de réception 3 agrège alors (étape EE400) tous les fragments reçus FR1, FR2, FR3 et FR4 pour obtenir le fichier F.

En variante, si le dispositif de réception 3 a connaissance du nombre total de fragments constituant le fichier F, par exemple en interrogeant le serveur 1 préalablement à la demande de transmission du premier fragment, le dispositif de réception 3 compare la valeur de l'indice k au nombre total de fragments du fichier F à récupérer.

Si l'indice k est inférieur au nombre total de fragments du fichier F, le dispositif de réception 3 en déduit que le dernier fragment FR4 du fichier F n'a pas encore été reçu (réponse non à l'étape EE300). Le cas échéant, le dispositif de réception 3 incrémente l'indice k (étape EE350) et réitère les étapes EE100 à EE300 afin de réceptionner le prochain fragment FRₖ du fichier F.

Si l'indice k est égal au nombre total de fragments du fichier F, le dispositif de réception 3 en déduit que le dernier fragment FR4 du fichier F a été reçu (réponse oui à l'étape EE300). Le dispositif de réception 3 agrège alors (étape EE400) tous les fragments reçus FR1, FR2, FR3 et FR4 pour obtenir le fichier F.

Dans le mode de réalisation décrit ici, le dispositif de transmission 3 vérifie ensuite l'intégrité du fichier F reçu en calculant lors d'une étape EE500 une empreinte EMP de ce fichier. Cette empreinte EMP est calculée en appliquant une fonction de hachage connue simultanément du terminal 2 et du serveur 1.

Puis le dispositif de réception 3 émet à destination du serveur 1, lors de l'étape EE600, une requête signée de validation R3 de cette empreinte du fichier F, cette requête signée R3 comprend également, outre sa signature, l'adresse MAC du terminal 2 et une information d'horodatage.

Dans le mode de réalisation décrit ici, le calcul de la signature de la requête R3 s'effectue de façon similaire au calcul de la signature de la requête de transmission R1ₖ.

Sur réception (étape EE700) en provenance du serveur 1 d'un deuxième message de réponse R4 à la requête signée de validation R3, le dispositif de réception 3 déchiffre, à l'étape EE800, le bloc de données transporté dans le deuxième message de réponse R4 pour obtenir une information de confirmation.

Dans le mode de réalisation décrit ici, le calcul de la clé de déchiffrement du bloc de données transporté par la requête R4 s'effectue de façon similaire au calcul de la clé de déchiffrement du bloc de données transporté par la requête R2ₖ.

Dans le mode de réalisation décrit ici, l'information de confirmation est un entier pouvant prendre la valeur -1 indiquant que le fichier F reçu est corrompu ou une valeur positive, par exemple égale à la taille en octet du fichier F, indiquant que le fichier F reçu n'est pas corrompu.

Si l'information de confirmation n'est pas égale à -1 (réponse oui à l'étape EE850), le dispositif de réception sauvegarde, lors d'une étape EE900, le fichier F sur le terminal 2.

En relation avec la **figure 8****,** on va à présent décrire les principales étapes d'un procédé de transmission d'au moins une partie du fichier F mis en œuvre par le dispositif de transmission 4.

Sur réception, lors de l'étape F100, d'une requête signée de transmission R1ₖ d'un fragment FRₖ du fichier F en provenance du terminal 2, le dispositif de transmission 4 vérifie lors de l'étape F200 si la signature de la requête R1ₖ est correcte et si le terminal 2 est référencé dans sa table d'approbation TA.

Dans le mode de réalisation décrit ici, les terminaux sont référencés dans la table d'approbation TA par leur adresse MAC.

Dans le mode de réalisation décrit ici, l'adresse MAC du terminal et la signature de la requête signée de transmission R1ₖ sont extraits de la requête R1ₖ.

Si le terminal 2 n'est pas référencé dans la table d'approbation TA (réponse non à l'étape F200) ou si la signature de la requête R1ₖ est incorrecte, le dispositif de transmission 4 ignore la requête R1ₖ.

Si le terminal 2 est référencé dans la table d'approbation TA et si la signature de la requête R1ₖ est correcte (réponse oui à l'étape F200) et on suppose que c'est le cas ici, le dispositif de transmission 4 chiffre, lors d'une étape F300, le fragment FRₖ du fichier F.

Dans le mode de réalisation décrit ici, le chiffrage du fragment FRₖ est obtenu en appliquant l'algorithme de chiffrement « camélia » avec une clé de chiffrement calculée à partir d'une clef secrète partagée avec le terminal 2, de l'adresse MAC du terminal 2, de l'indice k référençant le fragment FRₖ dudit fichier F et d'une information d'horodatage d'un message de réponse R2ₖ.

Bien entendu, en variante d'autres algorithmes de chiffrement et/ou d'autres procédés d'obtention de la clé de chiffrement peuvent être utilisés.

Le bloc de données obtenu après chiffrage du fragment FRₖ et l'information d'horodatage est ensuite inséré dans le message de réponse R2ₖ à la requête signée de transmission R1ₖ. Puis le message R2ₖ est transmis (étape F400) à destination du terminal 2.

En relation avec la **figure 9****,** on va à présent décrire le comportement du dispositif de transmission 4 lorsque celui-ci reçoit une requête signée de validation R3 (étape G100) en provenance du terminal 2.

Sur réception de la requête signée de validation R3, le dispositif de transmission 4 vérifie, lors de l'étape G200, si la signature de la requête R3 est correcte et si le terminal 2 est référencé dans sa table d'approbation TA.

Dans le mode de réalisation décrit ici, l'adresse MAC du terminal et la signature de la requête signée de transmission R3 sont extraits de la requête R3.

Si le terminal 2 n'est pas référencé dans la table d'approbation TA (réponse non à l'étape G200) ou si la signature de la requête R3 est incorrecte, le dispositif de transmission 4 ignore la requête R3.

Si le terminal 2 est référencé dans la table d'approbation TA (réponse oui à l'étape G200) et si la signature de la requête R3 est correcte, et on suppose que c'est le cas ici, le dispositif de transmission 4 calcule alors, lors de l'étape G300, une empreinte EMP2 du fichier F.

Cette empreinte EMP2 est calculée en appliquant la fonction de hachage, connue simultanément du terminal 2 et du serveur 1, qui a été utilisée par le terminal 2 pour calculer l'empreinte EMP.

Le dispositif de transmission vérifie alors l'identité des deux empreintes EMP et EMP2 lors d'une étape G400.

Si les deux empreintes sont identiques (réponse oui à l'étape G400), le dispositif de transmission 4 calcule la taille du fichier F pour initialiser avec cette valeur, à l'étape G500, une information de configuration INFO CONFIRM.

Si les deux empreintes sont différentes (réponse non à l'étape G400), le dispositif de transmission 4 initialise à la valeur -1, à l'étape G600, une information de configuration INFO CONFIRM.

Le dispositif de transmission 4 insère alors l'information de validation INFO CONFIRM dans un message de réponse R4, puis émet, lors d'une étape G700, à destination du terminal 2 le message de réponse R4 à la requête signée de validation R3.

## Revendications

1. Procédé de gestion d'un canal de communication virtuel privé entre un terminal (2) ayant une adresse IP fixe et un serveur (1) destiné à être mis en œuvre par un dispositif de communication (3), ledit dispositif de communication (3) étant installé sur ledit terminal (2), ledit procédé de gestion comprenant :
- une étape de détection (E100) de la disponibilité d'un premier canal de communication virtuel privé établi entre ledit terminal (2) et ledit serveur (1) ;
- si ledit premier canal de communication virtuel privé est disponible et établi :
∘ une étape d'obtention (E200) d'un paramètre (PQA) représentatif d'une qualité de transmission par le premier canal de communication virtuel privé ; et
∘ si ce paramètre est représentatif d'une qualité de transmission inférieure à un niveau de qualité prédéterminé :
▪ une étape de fermeture (E400) dudit premier canal de communication virtuel privé établi entre ledit terminal (2) et ledit serveur (1) ;
▪ une première étape de récupération (E500) auprès dudit serveur (1) de l'ensemble des informations de configuration nécessaires à l'établissement d'un deuxième canal de communication virtuel privé par le dispositif de communication (3) entre ledit terminal (2) et ledit serveur (1), ladite première étape de récupération s'effectuant selon un protocole de communication sécurisé ; et
▪ une étape d'établissement (E600) d'un deuxième canal de communication virtuel privé entre ledit terminal (2) et ledit serveur (1) à l'aide desdites informations de configuration.

2. Procédé de gestion d'un canal de communication virtuel privé selon la revendication 1 comprenant en outre si ledit paramètre (PQA) est représentatif d'une qualité de transmission inférieure à un niveau de qualité prédéterminé, une étape de signalement (E300) audit serveur de la mauvaise qualité dudit premier canal de communication virtuel privé.

3. Procédé de gestion d'un canal de communication virtuel privé selon l'une quelconque des revendications 1 à 2 comprenant en outre si ledit premier canal de communication virtuel privé n'est pas disponible :
- une étape de vérification (E700) de la disponibilité sur le terminal (2) de l'ensemble des informations de configuration nécessaires à l'établissement d'un canal de communication virtuel privé ;
- si au moins une desdites informations de configuration n'est pas disponible sur ledit terminal (2), une deuxième étape de récupération (E800) de ladite au moins une information de configuration indisponible sur ledit terminal (2) par le dispositif de communication (3) auprès dudit serveur (1), ladite deuxième étape de récupération (E800) s'effectuant selon un protocole de communication sécurisé
- une étape d'établissement (E900) d'un troisième canal de communication virtuel privé entre ledit terminal (2) et ledit serveur (1).

4. Procédé de gestion d'un canal de communication virtuel privé selon l'une quelconque des revendications 1 à 3 dans lequel ladite étape de détection (E100) est réalisée périodiquement.

5. Procédé de gestion d'un canal de communication virtuel privé selon l'une quelconque des revendications 1 à 4 dans lequel ledit ensemble d'information de configuration comporte au moins un fichier (F) stocké sur ledit serveur (1), ledit fichier (F) étant fragmentable en une pluralité de fragments (FR₁, FR₂, FR₃, FR₄), lesdites étapes de récupération (E500, E800) comprenant pour chacun desdits fragments (FRₖ) :
- une étape d'émission (EE100) à destination du serveur (1) d'une requête signée de transmission (R1ₖ) dudit fragment (FRₖ), ladite étape d'émission (EE100) étant répétée jusqu'à réception d'un premier message de réponse (R2ₖ) en provenance du serveur (1) à ladite requête signée de transmission (R1ₖ) ; et
- une première étape de déchiffrement (EE200) du bloc de données transporté dans ledit message de réponse (R2ₖ) pour obtenir ledit fragment (FRₖ).

6. Procédé de gestion selon la revendication 5 comprenant en outre une étape de détection (EE300) que tous les fragments (FR₁, FR₂, FR₃, FR₄) dudit fichier (F) ont été réceptionnés.

7. Procédé de gestion selon la revendication 6 comprenant en outre une étape d'agrégation (EE400) desdits fragments (FR₁, FR₂, FR₃, FR₄) pour obtenir ledit fichier (F).

8. Procédé de gestion selon la revendication 7 comprenant en outre :
- une étape de calcul (EE500) d'une première empreinte (EMP) dudit fichier (F) en utilisant une fonction de hachage connue du serveur (1) ;
- une étape d'émission (EE600) à destination dudit serveur (1) d'une requête signée de validation (R3) de ladite première empreinte (EMP) ;
- une étape de réception (EE700) en provenance du serveur (1) d'un deuxième message de réponse (R4) à ladite requête signée de validation (R3) ; et
- une deuxième étape de déchiffrement du bloc de données transporté dans ledit deuxième message de réponse (R4) pour obtenir une information de confirmation ; et
- si l'information de confirmation valide l'intégrité dudit fichier (F), une étape de sauvegarde (EE900) dudit fichier.

9. Procédé de gestion selon l'une des revendications 5 à 8 dans lequel la signature desdites requêtes émises (R1ₖ, R3) par le dispositif de communication (3) à destination du serveur (1) est calculée sur un champ formé par la concaténation d'une clef secrète partagée avec le serveur (1), de l'adresse MAC du terminal (2) et d'une information d'horodatage desdites requêtes (R1ₖ, R3), ladite information d'horodage étant insérée dans lesdites requêtes (R1ₖ, R3).

10. Programme d'ordinateur comportant des instructions pour l'exécution des étapes du procédé de gestion d'un canal de communication virtuel privé selon l'une quelconque des revendications 1 à 9 lorsque ledit programme est exécuté par un ordinateur.

11. Support d'enregistrement lisible par un ordinateur sur lequel est enregistré un programme d'ordinateur comportant des instructions pour l'exécution des étapes du procédé de gestion d'un canal de communication virtuel privé selon l'une quelconque des revendications 1 à 9.

12. Dispositif de communication (3) destiné à être installé sur un terminal (2) ayant une adresse IP fixe, ledit dispositif de communication (3) étant destiné à gérer un canal de communication virtuel privé entre ledit terminal (2) et un serveur (1), ledit dispositif de communication (3) comprenant :
- un module de détection (3B1) de la disponibilité d'un premier canal de communication virtuel privé établi entre ledit terminal (2) et ledit serveur (1) ;
- un module d'obtention (3B2) d'un paramètre (PQA) représentatif d'une qualité de transmission par le premier canal de communication virtuel privé, ledit module d'obtention (3B2) étant activé si ledit premier canal de communication virtuel privé est disponible ;
- un module de fermeture (3B3) du premier canal de communication virtuel privé établi entre ledit terminal (2) et ledit serveur (1) ;
- un module de récupération (3B4) auprès dudit serveur (1) de l'ensemble des informations de configuration nécessaires à l'établissement d'un deuxième canal de communication virtuel privé entre ledit terminal (2) et ledit serveur (1), ladite récupération s'effectuant selon un protocole de communication sécurisé ; et
- un module d'établissement (3B5) d'un deuxième canal de communication virtuel privé entre ledit terminal (2) et ledit serveur (1) à l'aide desdites informations de configuration,
le module de fermeture (3B3), le module de récupération (3B4) et le module d'établissement (3B5) étant activés si ledit paramètre (PQA) est représentatif d'une qualité de transmission inférieure à un niveau de qualité prédéterminé.

13. Dispositif de communication (3) selon la revendication 12 comprenant en outre un module de signalement (3B6) audit serveur (1) de la mauvaise qualité dudit premier canal de communication virtuel privé, ledit module de signalement (3B6) étant activé si ledit paramètre (PQA) est représentatif d'une qualité de transmission inférieure à un niveau de qualité prédéterminé

14. Dispositif de communication (3) selon l'une des revendications 12 à 13 dans lequel ledit ensemble d'information de configuration comporte au moins un fichier (F) stocké sur ledit serveur (1), ledit fichier (F) étant fragmentable en une pluralité de fragments (FR₁, FR₂, FR₃, FR₄), ledit dispositif de communication (3) comprenant :
- un module d'émission (33B1) à destination d'un serveur (1) d'une requête signée de transmission (R1ₖ) d'un fragment (FRₖ) dudit fichier (F), ledit premier module d'émission (33B1) étant activé jusqu'à réception d'un premier message de réponse (R2ₖ) en provenance du serveur (1) à ladite requête de transmission ;
- un module de déchiffrement (33B2) du bloc de données transporté dans ledit message de réponse (R2) pour obtenir ledit fragment (FRₖ).

15. Terminal (2) sur lequel est installé un dispositif de communication (3) selon l'une quelconque des revendications 12 à 14.

## Patentansprüche

1. Verfahren zur Steuerung eines privaten virtuellen Kommunikationskanals zwischen einem Endgerät (2), das eine feste IP-Adresse aufweist, und einem Server (1), das dazu vorgesehen ist, von einer Kommunikationsvorrichtung (3) durchgeführt zu werden, wobei die Kommunikationsvorrichtung (3) auf dem Endgerät (2) installiert ist, wobei das Steuerverfahren umfasst:
- einen Schritt des Erfassens (E100) der Verfügbarkeit eines ersten privaten virtuellen Kommunikationskanals, der zwischen dem Endgerät (2) und dem Server (1) eingerichtet ist,
- wenn der erste private virtuelle Kommunikationskanal verfügbar und eingerichtet ist:
∘ einen Schritt des Erlangens (E200) eines Parameters (PQA), der eine Übertragungsqualität darstellt, durch den ersten privaten virtuellen Kommunikationskanal, und
∘ wenn dieser Parameter eine Übertragungsqualität darstellt, die geringer als ein vorher bestimmtes Qualitätsniveau ist:
▪ einen Schritt des Schließens (E400) des ersten privaten virtuellen Kommunikationskanals, der zwischen dem Endgerät (2) und dem Server (1) eingerichtet ist,
▪ einen ersten Schritt des Wiederherstellens (E500) der Gesamtheit von Konfigurationsinformationen an dem Server (1), die zur Einrichtung eines zweiten privaten virtuellen Kommunikationskanals durch die Kommunikationsvorrichtung (3) zwischen dem Endgerät (2) und dem Server (1) erforderlich sind, wobei der erste Schritt des Wiederherstellens gemäß einem sicheren Kommunikationsprotokoll erfolgt, und
▪ einen Schritt des Einrichtens (E600) eines zweiten privaten virtuellen Kommunikationskanals zwischen dem Endgerät (2) und dem Server (1) mithilfe der Konfigurationsinformationen.

2. Verfahren zur Steuerung eines privaten virtuellen Kommunikationskanals nach Anspruch 1, ferner umfassend, wenn der Parameter (PQA) eine Übertragungsqualität darstellt, die geringer als ein vorher bestimmtes Qualitätsniveau ist, einen Schritt des Signalisierens (E300) der schlechten Qualität des ersten privaten virtuellen Kommunikationskanals an den Server.

3. Verfahren zur Steuerung eines privaten virtuellen Kommunikationskanals nach einem der Ansprüche 1 bis 2, ferner umfassend, wenn der erste private virtuelle Kommunikationskanal nicht verfügbar ist:
- einen Schritt des Verifizierens (E700) der Verfügbarkeit der Gesamtheit von Konfigurationsinformationen, die zur Einrichtung eines privaten virtuellen Kommunikationskanals erforderlich sind, auf dem Endgerät (2),
- wenn mindestens eine der Konfigurationsinformationen auf dem Endgerät (2) nicht verfügbar ist, einen zweiten Schritt des Wiederherstellens (E800) der mindestens einen Konfigurationsinformation, die auf dem Endgerät (2) nicht verfügbar ist, durch die Kommunikationsvorrichtung (3) an dem Server (1), wobei der zweite Schritt des Wiederherstellens (E800) gemäß einem sicheren Kommunikationsprotokoll erfolgt,
- einen Schritt des Einrichtens (E900) eines dritten privaten virtuellen Kommunikationskanals zwischen dem Endgerät (2) und dem Server (1).

4. Verfahren zur Steuerung eines privaten virtuellen Kommunikationskanals nach einem der Ansprüche 1 bis 3, wobei der Schritt des Erfassens (E100) periodisch vorgenommen wird.

5. Verfahren zur Steuerung eines privaten virtuellen Kommunikationskanals nach einem der Ansprüche 1 bis 4, wobei die Gesamtheit von Konfigurationsinformationen mindestens eine Datei (F) beinhaltet, die auf dem Server (1) gespeichert ist, wobei die Datei (F) in mehrere Fragmente (FR₁, FR₂, FR₃, FR₄) fragmentierbar ist, und wobei die Schritte des Wiederherstellens (E500, E800) für jedes der Fragmente (FRₖ) umfassen:
- einen Schritt des Sendens (EE100) einer an den Server (1) gerichteten signierten Anforderung zur Übertragung (R1ₖ) des Fragments (FRₖ), wobei der Schritt des Sendens (EE100) bis zum Empfangen einer von dem Server (1) stammenden ersten Antwortnachricht (R2ₖ) auf die signierte Anforderung zur Übertragung (R1ₖ) wiederholt wird, und
- einen ersten Schritt des Dechiffrierens (EE200) des Datenblocks, der in der Antwortnachricht (R2ₖ) transportiert wird, um das Fragment (FRₖ) zu erlangen.

6. Steuerverfahren nach Anspruch 5, ferner umfassend einen Schritt des Erfassens (EE300), dass alle Fragmente (FR₁, FR₂, FR₃, FR₄) der Datei (F) empfangen wurden.

7. Steuerverfahren nach Anspruch 6, ferner umfassend einen Schritt des Aggregierens (EE400) der Fragmente (FR₁, FR₂, FR₃, FR₄), um die Datei (F) zu erlangen.

8. Steuerverfahren nach Anspruch 7, ferner umfassend:
- einen Schritt des Berechnens (EE500) eines ersten Abdrucks (EMP) der Datei (F) unter Verwendung einer bekannten Hashfunktion des Servers (1),
- einen Schritt des Sendens (EE600) einer an den Server (1) gerichteten signierten Anforderung zur Validierung (R3) des ersten Abdrucks (EMP),
- einen Schritt des Empfangens (EE700) einer von dem Server (1) stammenden zweiten Antwortnachricht (R4) auf die signierte Anforderung zur Validierung (R3), und
- einen zweiten Schritt des Dechiffrierens des Datenblocks, der in der zweiten Antwortnachricht (R4) transportiert wird, um eine Bestätigungsinformation zu erlangen, und
- wenn die Bestätigungsinformation die Integrität der Datei (F) validiert, einen Schritt des Sicherns (EE900) der Datei.

9. Steuerverfahren nach einem der Ansprüche 5 bis 8, wobei die Signatur der von der Kommunikationsvorrichtung (3) gesendeten, an den Server (1) gerichteten Anforderungen (R1ₖ, R3) in einem Bereich berechnet wird, der durch die Verknüpfung eines mit dem Server (1) verteilten geheimen Schlüssels, der MAC-Adresse des Endgeräts (2) und einer Zeitstempelinformation der Anforderungen (R1ₖ, R3) gebildet wird, wobei die Zeitstempelinformation in die Anforderungen (R1ₖ, R3) eingefügt wird.

10. Computerprogramm, umfassend Anweisungen zur Ausführung von Schritten des Verfahrens zur Steuerung eines privaten virtuellen Kommunikationskanals nach einem der Ansprüche 1 bis 9, wenn das Programm von einem Computer ausgeführt wird.

11. Aufzeichnungsmedium, das von einem Computer lesbar, auf dem ein Computerprogramm aufgezeichnet ist, das Anweisungen zur Ausführung von Schritten des Verfahrens zur Steuerung eines privaten virtuellen Kommunikationskanals nach einem der Ansprüche 1 bis 9 beinhaltet.

12. Kommunikationsvorrichtung (3), die dazu vorgesehen ist, auf einem Endgerät (2) installiert zu werden, das eine feste IP-Adresse aufweist, wobei die Kommunikationsvorrichtung (3) dazu vorgesehen ist, einen privaten virtuellen Kommunikationskanal zwischen dem Endgerät (2) und einem Server (1) zu verwalten, wobei die Kommunikationsvorrichtung (3) umfasst:
- ein Modul zum Erfassen (3B1) der Verfügbarkeit eines ersten privaten virtuellen Kommunikationskanals, der zwischen dem Endgerät (2) und dem Server (1) eingerichtet ist,
- ein Modul zum Erlangen (3B2) eines Parameters (PQA), der eine Übertragungsqualität darstellt, durch den ersten privaten virtuellen Kommunikationskanal, wobei das Modul zum Erlangen (3B2) aktiviert wird, wenn der erste private virtuelle Kommunikationskanal verfügbar ist,
- ein Modul zum Schließen (3B3) des ersten privaten virtuellen Kommunikationskanals, der zwischen dem Endgerät (2) und dem Server (1) eingerichtet ist,
- ein Modul zum Wiederherstellen (3B4) der Gesamtheit von Konfigurationsinformationen an dem Server (1), die zur Einrichtung eines zweiten privaten virtuellen Kommunikationskanals zwischen dem Endgerät (2) und dem Server (1) erforderlich sind, wobei das Wiederherstellen gemäß einem sicheren Kommunikationsprotokoll erfolgt, und
- ein Modul zum Einrichten (3B5) eines zweiten privaten virtuellen Kommunikationskanals zwischen dem Endgerät (2) und dem Server (1) mithilfe der Konfigurationsinformationen,
wobei das Modul zum Schließen (3B3), wobei das Modul zum Wiederherstellen (3B4) und das Modul zum Einrichten (3B5) aktiviert werden, wenn der Parameter (PQA) eine Übertragungsqualität darstellt, die geringer als ein vorher bestimmtes Qualitätsniveau ist.

13. Kommunikationsvorrichtung (3) nach Anspruch 12, ferner umfassend ein Modul zum Signalisieren (3B6) der schlechten Qualität des ersten privaten virtuellen Kommunikationskanals an den Server (1), wobei das Modul zum Signalisieren (3B6) aktiviert wird, wenn der Parameter (PQA) eine Übertragungsqualität darstellt, die geringer als ein vorher bestimmtes Qualitätsniveau ist.

14. Kommunikationsvorrichtung (3) nach einem der Ansprüche 12 bis 13, wobei die Gesamtheit von Konfigurationsinformationen mindestens eine Datei (F) beinhaltet, die auf dem Server (1) gespeichert ist, wobei die Datei (F) in mehrere Fragmente (FR₁, FR₂, FR₃, FR₄) fragmentierbar ist, und wobei die Kommunikationsvorrichtung (3) umfasst:
- ein Modul zum Senden (33B1) einer an einen Server (1) gerichteten signierten Anforderung zur Übertragung (R1ₖ) eines Fragments (FRₖ) der Datei (F), wobei das erste Modul zum Senden (33B1) bis zum Empfangen einer von dem Server (1) stammenden ersten Antwortnachricht (R2ₖ) auf die Anforderung zur Übertragung aktiviert wird,
- ein Modul zum Dechiffrieren (33B2) des Datenblocks, der in der Antwortnachricht (R2) transportiert wird, um das Fragment (FRₖ) zu erlangen.

15. Endgerät (2), auf dem eine Kommunikationsvorrichtung (3) nach einem der Ansprüche 12 bis 14 installiert ist.

## Claims

1. Method for managing a virtual private communication channel between a terminal (2) having a fixed IP address and a server (1) intended to be implemented by a communication device (3), said communication device (3) being installed on said terminal (2), said management method comprising:
- a detection step (E100) of the availability of a first virtual private communication channel set up between said terminal (2) and said server (1);
- if said first virtual private communication channel is available and set up:
∘ an obtaining step (E200) of a parameter (PQA) representing quality of transmission by the first virtual private communication channel; and
∘ if this parameter represents a quality of transmission lower than a predetermined quality level:
▪ a closing step (E400) of said first private communication channel set up between said terminal (2) and said server (1);
▪ a first recovery step (E500) from said server (1) a set of configuration data required to set up a second virtual private communication channel by the communication device (3) between said terminal (2) and said server (1), said first recovery step being implemented following a secure communication protocol; and
▪ a setting up step (E600) of a second virtual private communication channel between said terminal (2) and said server (1) using said configuration data.

2. The method for managing a virtual private communication channel according to claim 1, if said parameter (PQA) represents a quality of transmission lower than a predetermined quality level, further comprising a signalling step (E300) to said server of the poor quality of said first virtual private communication channel.

3. The method for managing a virtual private communication channel according to any of claims 1 to 2, further comprising, if said first virtual private communication channel is not available:
- a checking step (E700) of the availability on the terminal (2) of the set of configuration data required to set up a virtual private communication channel;
- if at least one of said configuration data is not available on said terminal (2), a second recovery step (E800) of said at least one configuration datum unavailable on said terminal (2) by the communication device (3) from said server (1), said second recovery step (E800) being implemented in accordance with a secure communication protocol;
- a setting up step (E900) of a third virtual private communication channel between said terminal (2) and said server (1).

4. The method for managing a virtual private communication channel according to any of claims 1 to 3, wherein said detection step (E100) is implemented periodically.

5. The method for managing a virtual private communication channel according to any of claims 1 to 4, wherein said set of configuration data comprises at least one file (F) stored on said server (1), said file (F) being fragmentable into a plurality of fragments (FR₁, FR₂, FR₃, FR₄), said recovery steps (E500, E800) for each of said fragments (FRₖ) comprising:
- a sending step (EE100) to the server (1) of a signed transmission request (R1ₖ) for said fragment (FRₖ), said send step (EE100) being repeated until a first response message (R2ₖ) is received from the server (1) to said signed transmission request (R1ₖ); and
- a first decryption step (EE200) of the data block conveyed in said response message (R2ₖ), to obtain said fragment (FRₖ).

6. The management method according to claim 5 further comprising a detection step (EE300) that all the fragments (FR₁, FR₂, FR₃, FR₄) of said file (F) have been received.

7. The management method according to claim 6 further comprising an aggregating step (EE400) of said fragments (FR₁, FR₂, FR₃, FR₄) to obtain said file (F).

8. The management method according to claim 7, further comprising:
- a calculation step (EE500) of a first imprint (EMP) of said file (F) using a hash function known to the server (1);
- a sending step (EE600) to the server (1) of a signed validation request (R3) of said first imprint (EMP);
- a reception step (EE700) of (1) a second response message (R4) to said signed validation request (R3); and
- a second decryption step of the data block conveyed in said second response message (R4) to obtain confirmation information; and
- if the confirmation information validates the integrity of said file (F), a saving step (EE900) of said file.

9. The management method according to one of claims 5 to 8, wherein the signature of said requests (R1ₖ, R3) sent by the communication device (3) to the server (1) is computed in a field formed by concatenation of a secret key shared with the server (1), of the MAC address of the terminal (2) and of timestamp data of said requests (R1ₖ, R3), said timestamp data being inserted in said requests (R1ₖ, R3).

10. Computer programme comprising instructions for execution of the steps of the method for managing a virtual private communication channel according to any of claims 1 to 9, when said programme is executed by a computer.

11. Recording medium readable by a computer on which a computer programme is recorded comprising instructions for execution of the steps of the method for managing a virtual private communication channel according to any of claims 1 to 9.

12. Communication device (3) intended to be installed on a terminal (2) having a fixed IP address, said communication device (3) being intended to manage a virtual private communication channel between said terminal (2) and a server (1), said communication device (3) comprising:
- a module (3B1) to detect the availability of a first virtual private communication channel set up between said terminal (2) and said server (1);
- a module (3B2) to obtain a parameter (PQA) representing quality of transmission by the first virtual private communication channel, said obtain module (3B2) being activated if said first virtual private communication channel is available;
- a module (3B3) to close the first virtual private communication channel set up between said terminal (2) and said server (1);
- a module (3B4) to recover from said server (1) the set of configuration data required for setting up a second virtual private communication channel between said terminal (2) and said server (1), said recovery being implemented following a secure communication protocol; and
- a module (3B5) to set up a second virtual private communication channel between said terminal (2) and said server (1) using said configuration data,
the closing module (3B3), recovery module (3B4) and set-up module (3B5) being activated if said parameter (PQA) represents quality of transmission lower than a predetermined quality level.

13. The communication device (3) according to claim 12 further comprising a module (3B6) to signal to said server (1) the poor quality of said first virtual private communication channel, said signalling module (3B6) being activated if said parameter (PQA) represents quality of transmission lower than a predetermined quality level.

14. The communication device (3) according to one of claims 12 to 13, wherein said set of configuration data comprises at least one file (F) stored on said server (1), said file (F) being fragmentable into a plurality of fragments (FR₁, FR₂, FR₃, FR₄), said communication device (3) comprising:
- a module (33B1) to send the server (1) a signed transmission request (R1ₖ) for a fragment (FRₖ) of said file (F), said first send module (33B1) being activated until a first response message (R2ₖ) is received from the server (1) to said transmission request;
- a decryption module (33B2) of the data block conveyed in said response message (R2) to obtain said fragment (FRₖ).

15. Terminal (2) on which there is installed a communication device (3) according to any of claims 12 to 14.
